# EUROPEAN PATENT SPECIFICATION

(11) **EP 0 443 661 B1**
(45) Date of publication and mention of the grant of the patent: **17.08.1994**
(21) Application number: 91200273.0
(22) Date of filing: 08.02.1991
(51) Int. Cl.: B01D 53/14

(54) **Removing solids, haloic acid, COS and H2S from a feed gas**
Entfernung von Feststoffen, Halonwasserstoffsäure, COS und H2S aus Gasen
Elimination des solides, haloacides, COS et H2S des gaz

(30) Priority: 12.02.1990 GB 9003092
(43) Date of publication of application: 28.08.1991
(73) Proprietor: SHELL INTERNATIONALE RESEARCH MAATSCHAPPIJ B.V., 2596 HR Den Haag (NL)
(72) Inventor: Bowman, David Frederick, NL-2596 HR The Hague (NL)

(56) References cited:
- DE-A- 2 024 020
- US-A- 3 856 921
- US-A- 3 931 389
- US-A- 3 989 811

## Description

The present invention relates to a process for removing contaminants from a feed gas such as synthesis gas produced by partial oxidation of carbonaceous material such as coal, hydrocarbon oil or natural gas. Contaminants which are present in such a feed gas are solids, haloic acid(s) such as HCl or HF, COS and H₂S.

It is an object of the present invention to provide a simple process for removing the contaminants from the gas.

To this end the process for removing solids, haloic acid(s), COS and H₂S from a feed gas according to the invention comprises the steps of
(a) contacting the feed gas with water to obtain a mixture of feed gas and water;
(b) contacting the mixture of feed gas and water with an aqueous solution comprising an alkali metal salt of a weak acid;
(c) supplying the mixture obtained in step (b) to a gas/liquid separator and removing from the gas/liquid separator a bottom stream including solids and a gaseous overhead stream;
(d) contacting the gaseous overhead stream with an aqueous solution comprising an alkali metal salt of a weak acid to convert COS and removing H₂S and water from the gaseous overhead stream; and
(e) using water removed in step (d) in contacting the feed gas in step (a).

In step (d), the gaseous overhead stream is contacted with an aqueous solution comprising an alkali metal salt of a weak acid, and H₂S and water are removed from the gaseous overhead stream. In one embodiment of the invention this step comprises contacting the gaseous overhead stream counter-currently with aqueous solution comprising an alkali metal salt of a weak acid to obtain treated wet gas, removing water from the treated wet gas, and removing H₂S from the treated gas to obtain purified gas. In a further embodiment of the invention step (d) comprises contacting the gaseous overhead stream counter-currently with lean aqueous solution comprising an alkali metal salt of a weak acid to obtain loaded solution and purified wet gas, regenerating loaded solution to obtain an H₂S-containing stream and lean aqueous solution comprising an alkali metal salt of a weak acid, and removing water from the purified wet gas to obtain purified gas.

The aqueous solution comprising an alkali metal salt of a weak acid can be a sodium or a potassium salt of a weak acid such as carbonic acid. Suitably the aqueous solution comprising an alkali metal salt of a weak acid is an aqueous solution comprising K₂CO₃.

The invention will now be described in more detail by way of example with reference to the enclosed drawing, wherein
Figure 1 shows schematically a flow scheme of the first embodiment of the process according to the invention; and
Figure 2 shows schematically a flow scheme of the second embodiment of the process according to the invention.

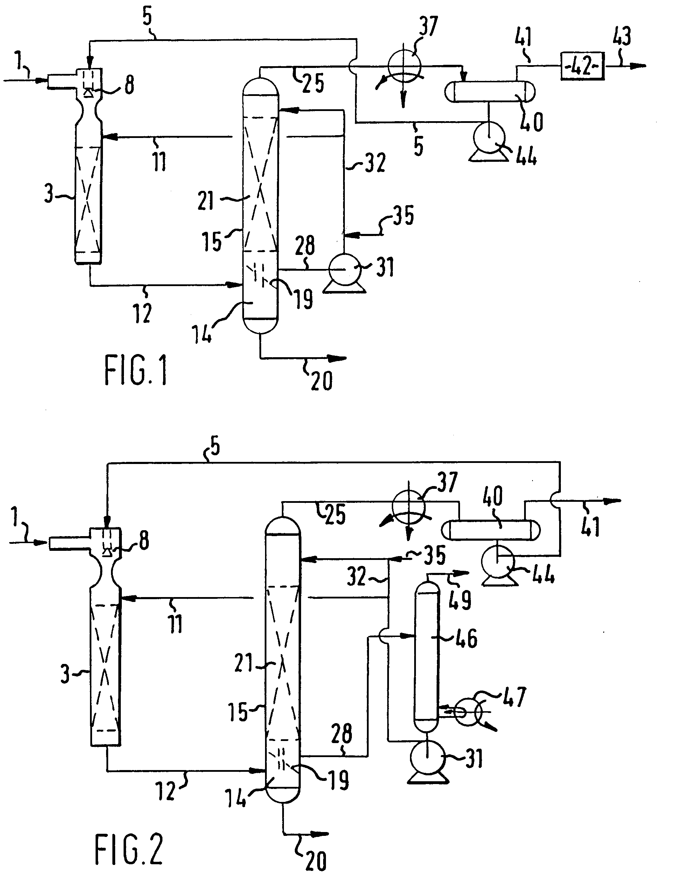

Reference is now made to Figure 1. Superheated feed gas containing in addition to CO and H₂ solids, haloic acid(s), COS and H₂S is supplied at elevated pressure through conduit 1 to the upper part of contacting zone 3. Water supplied to the contacting zone 3 through conduit 5 is sprayed through nozzle 8 into the feed gas to obtain a mixture of saturated feed gas and water. The feed gas is cooled by the vaporizing water. An advantage of this direct cooling is that scaling in the contacting zone 3 will not occur.

Co-currently the mixture of feed gas and water is contacted with aqueous solution comprising an alkali metal salt of a weak acid in the form of an aqueous solution comprising K₂CO₃ which is supplied to the contacting zone 3 through conduit 11. In the mixture haloic acid(s) is (are) neutralized. Through conduit 12 the mixture of feed gas and aqueous solution is supplied to a gas/liquid separator in the form of separation zone 14 in the lower part of contactor 15. From the lower part of the separation zone 14 a bottom stream is removed through conduit 20, and from its upper part a gaseous overhead stream is removed. This gaseous overhead stream is passed through chimney tray 19 into the upper part 21 of contactor 15. The bottom stream is an aqueous stream including solids, halides and spent salt, this bottom stream is further treated (not shown) before it can be disposed of. The gaseous overhead stream is thus substantially free from solids and haloic acid(s).

In the upper part 21 of contactor 15, the gaseous overhead stream exiting from the separation zone 14 is contacted with aqueous solution comprising an alkali metal salt of a weak acid in the form of an aqueous solution including K₂CO₃ to convert COS into H₂S by means of hydrolysis. COS-free treated wet gas is removed from upper part 21 of contactor 15 through conduit 25. The aqueous solution of K₂CO₃ is removed from the bottom of the upper part 21 through conduit 28, and displaced by pump 31 through conduit 32 to the top of the upper part 21. Make-up material for the aqueous solution can be supplied through conduit 35.

COS-free treated wet gas is cooled in heat-exchanger 37, water is separated from the gas in vessel 40 to produce cooled saturated gas which is passed through conduit 41 to a plant 42 for removing H₂S from the gas. Purified gas is removed through conduit 43. As the treated wet gas does not contain any non-volatile components, the water condensed from it is free from non-volatile components. Therefore, as scaling is caused when an aqueous solution containing non-volatile components is evaporated, the water as supplied to nozzle 8 will not cause scaling.

The separated water is passed by pump 44 through conduit 5 to the spray nozzle 8 in the contacting zone 3.

As H₂S is only removed downstream contactor 15, the aqueous solution including K₂CO₃ which is circulated by pump 31 is saturated with H₂S, and since the aqueous solution is not regenerated the solution is also saturated with CO₂.

Reference is now made to Figure 2 relating to the second embodiment of the invention; devices which are similar to devices as discussed with reference to Figure 1 have been given the same reference numeral. In this embodiment the aqueous solution is regenerated in regenerator 46 by flashing to a lower pressure and by heating with part of the aqueous solution heated in reboiler 47. A stream containing H₂S and desorbed CO₂ is passed through conduit 49 to a sulphur recovery plant (not shown). In this embodiment COS conversion is combined with H₂S removal with the aqueous solution comprising an alkali metal salt of a weak acid. It will be appreciated that the saturated gas passing through conduit 41 is now free from H₂S.

An important feature of the process according to the present invention is cooling the superheated feed gas with water free from non-volatile components to produce a mixture of feed gas and water. As a result of the absence of non-volatile components there will no scaling in the contacting zone 3.

A further feature is that the solids removed through conduit 20 are concentrated in only a small aqueous stream; the amount of water in this stream is the difference between the the amount of water entering the process in the superheated feed gas and the amount of water in the saturated gas leaving the process through conduit 41 (plus the amount of water leaving through conduit 49, see Figure 2).

As it is likely that some solids will be entrained through the chimney tray 19, solids will enter the aqueous solution with which the gaseous overhead stream is counter-currently contacted in the upper part 21 of contactor 15. Solids build-up in the aqueous solution is prevented by the bleed through conduit 11.

An advantage of the process is that water required for the cooling is continuously being recovered for reuse.

HCN can be a further contaminant in the feed gas. To remove HCN, the aqueous solution should furthermore contain elemental sulphur or a precursor of sulphur. HCN is then removed as SCN⁻ in the aqueous solution.

## Claims

1. Process for removing solids, haloic acid(s), COS and H₂S from a feed gas comprising the steps of
(a) contacting the feed gas with water to obtain a mixture of feed gas and water;
(b) contacting the mixture of feed gas and water with an aqueous solution comprising an alkali metal salt of a weak acid;
(c) supplying the mixture obtained in step (b) to a gas/liquid separator and removing from the gas/liquid separator a bottom stream including solids and a gaseous overhead stream;
(d) contacting the gaseous overhead stream with an aqueous solution comprising an alkali metal salt of a weak acid to convert COS and removing H₂S and water from the gaseous overhead stream; and
(e) using water removed in step (d) in contacting the feed gas in step (a).

2. Process as claimed in claim 1, wherein contacting the gaseous overhead stream with an aqueous solution comprising an alkali metal salt of a weak acid and removing H₂S and water from the gaseous overhead stream in step (d) comprises contacting the gaseous overhead stream counter-currently with aqueous solution comprising an alkali metal salt of a weak acid to obtain treated wet gas, removing water from the treated wet gas, and removing H₂S from the treated gas to obtain purified gas.

3. Process as claimed in claim 1, wherein contacting the gaseous overhead stream with an aqueous solution comprising an alkali metal salt of a weak acid and removing H₂S and water from the gaseous overhead stream in step (d) comprises contacting the gaseous overhead stream counter-currently with lean aqueous solution comprising an alkali metal salt of a weak acid to obtain loaded solution and purified wet gas, regenerating loaded solution to obtain an H₂S-containing stream and lean aqueous solution comprising an alkali metal salt of a weak acid, and removing water from the purified wet gas to obtain purified gas.

4. Process as claimed in any one of the claims 1-3, wherein the weak acid is carbonic acid.

5. Process as claimed in claim 4, wherein the alkali metal salt is K₂CO₃.

## Patentansprüche

1. Verfahren zum Entfernen von Feststoffen, Halogensäure(n), COS und H₂S aus einem Betriebsgas, welches die folgenden Verfahrensstufen umfaßt:
a) Kontaktieren des Betriebsgases mit Wasser zwecks Erhalt einer Mischung von Betriebsgas und Wasser;
b) Kontaktieren der Mischung aus Betriebsgas und Wasser mit einer wäßrigen Lösung, umfassend ein Alkalimetallsalz einer schwachen Säure;
c) Einspeisen der in Stufe b) erhaltenen Mischung in eine Gas/Flüssig-Trennvorrichtung und Abziehen eines Bodenstroms, welcher Feststoffe enthält, und eines gasförmigen Kopfstroms aus der Gas/Flüssig-Trennvorrichtung;
d) Kontaktieren des gasförmigen Kopfstroms mit einer wäßrigen Lösung, umfassend ein Alkalimetallsalz einer schwachen Säure, zwecks Umwandlung von COS und Entfernung von H₂S und Wasser aus dem gasförmigen Kopfstrom; und
e) Verwenden des in Stufe d) entfernten Wassers zum Kontaktieren des Betriebsgases in Stufe a).

2. Verfahren , wie in Anspruch 1 beansprucht, in welchem das Kontaktieren des gasförmigen Kopfstroms mit einer wäßrigen Lösung, die ein Alkalimetallsalz einer schwachen Säure enthält, und das Entfernen von H₂S und Wasser aus dem gasförmigen Kopfstrom in Stufe d) das Kontaktieren des gasförmigen Kopfstroms im Gegenstrom mit der wäßrigen Lösung, enthaltend ein Alkalimetallsalz einer schwachen Säure, zwecks Erhalt von behandeltem Naßgas, das Entfernen von Wasser aus dem behandelten Naßgas und das Entfernen von H₂S aus dem behandelten Gas zwecks Erhalt von gereinigtem Gas umfaßt.

3. Verfahren, wie in Anspruch 1 beansprucht, in welchem das Kontaktieren des gasförmigen Kopfstroms mit einer wäßrigen Lösung, die ein Alkalimetallsalz einer schwachen Säure enthält, und das Entfernen von H₂S und Wasser aus dem gasförmigen Kopfstrom in Stufe d) das Kontaktieren des gasförmigen Kopfstroms im Gegenstrom mit einer mageren wäßrigen Lösung, enthaltend ein Alkalimetallsalz einer schwachen Säure, zwecks Erhalt einer beladenen Lösung und eines gereinigten Naßgases, das Regenerieren der beladenen Lösung zwecks Erhalt eines H₂S-haltigen Stroms und einer mageren wäßrigen Lösung, enthaltend ein Alkalimetallsalz einer schwachen Säure, und das Entfernen von Wasser aus dem gereinigten Naßgas zwecks Erhalt von gereinigtem Gas umfaßt.

4. Verfahren, wie in einem der Ansprüche 1 bis 3 beansprucht, in welchem die schwache Säure Kohlensäure ist.

5. Verfahren, wie in Anspruch 4 beansprucht, in welchem das Alkalimetallsalz K₂CO₃ ist.

## Revendications

1. Procédé pour l'élimination des solides, acide(s) halogénhydrique(s), COS et H₂S d'un gaz de charge, qui comprend les étapes de :
(a) mise en contact du gaz de charge avec de l'eau pour obtenir un mélange de gaz de charge et d'eau,
(b) mise en contact du mélange de gaz de charge et d'eau avec une solution aqueuse comprenant un sel de métal alcalin d'un acide faible ;
(c) apport du mélange obtenu dans l'étape (b) vers un séparateur gaz/liquide et séparation à partir du séparateur gaz/liquide d'un courant de fond comprenant les solides et d'un courant gazeux supérieur,
(d) mise en contact du courant gazeux supérieur avec une solution aqueuse comprenant un sel de métal alcalin d'un acide faible pour transformer COS et séparation de H₂S et de l'eau d'avec le courant gazeux supérieur, et
(e) utilisation de l'eau séparée dans l'étape (d) dans la mise en contact du gaz de charge dans l'étape (a).

2. Procédé selon la revendication 1, dans lequel la mise en contact du courant gazeux supérieur avec une solution aqueuse comprenant un sel de métal alcalin d'un acide faible et la séparation de H₂S et de l'eau d'avec le courant gazeux supérieur dans l'étape (d) comprennent la mise en contact du courant gazeux supérieur à contre-courant avec une solution aqueuse comprenant un sel de métal alcalin d'un acide faible pour obtenir un gaz humide traité, la séparation de l'eau d'avec le gaz humide traité et la séparation de H₂S du gaz traité pour obtenir du gaz purifié.

3. Procédé selon la revendication 1, dans lequel la mise en contact du courant gazeux supérieur avec une solution aqueuse comprenant un sel de métal alcalin d'un acide faible et la séparation de H₂S et de l'eau d'avec le courant gazeux supérieur dans l'étape (d) comprennent la mise en contact du courant gazeux supérieur à contre-courant avec une solution aqueuse pauvre comprenant un sel de métal alcalin d'un acide faible pour obtenir une solution chargée et un gaz humide purifié, la régénération de la solution chargée pour obtenir un courant contenant H₂S et une solution aqueuse pauvre comprenant un sel de métal alcalin d'un acide faible, et la séparation de l'eau d'avec le gaz humide purifié pour obtenir du gaz purifié.

4. Procédé selon l'une quelconque des revendications 1 - 3, dans lequel l'acide faible est l'acide carbonique.

5. Procédé selon la revendication 4, dans lequel le sel de métal alcalin est K₂CO₃.
